# EUROPEAN PATENT APPLICATION

(11) **EP 4 186 881 A1**
(43) Date of publication of application: **31.05.2023**
(21) Application number: 22209308.0
(22) Date of filing: 24.11.2022
(51) Int. Cl.: C04B 41/87

(54) **PRODUCING TANTALUM CARBIDE LAYER ON TECHNICAL CERAMICS USING A SPRAY COATING AND HIGH-TEMPERATURE SINTERING PROCESS BASED ON AQUEOUS SOLUTIONS**

(30) Priority: 24.11.2021 EP 21210207; 24.11.2021 EP 21210192; 24.11.2021 EP 21210190
(71) Applicant: Fraunhofer-Gesellschaft zur Förderung der angewandten Forschung e.V., 80686 München (DE)
(72) Inventor: Lang, Michael, 91058 Erlangen (DE); Shetty, Abhishek, 91085 Erlangen (DE); Schuck, Kevin, 91058 Erlangen (DE); Reimann, Christian, 91058 Erlangen (DE)
(74) Representative: Pfenning, Meinig & Partner mbB

(57) **Abstract**

The present invention relates to a substrate having a metal carbide coating, in particular a tantalum carbide coating. The substrate might preferably be a technical ceramic, a refractory metal or a composite material. Furthermore, the present invention relates to a method for coating a substrate with a metal carbide coating with the steps of application of an aqueous-based suspension of metal carbide particles suitable for the wet-chemical preparation on the substrate, preferably a high temperature technical ceramic, followed by a heat treatment process. In particular, the present invention relates to producing a tantalum carbide layer on substrates, e.g. technical ceramics, refractory metals, or composite materials, using a spray coating and high-temperature sintering process based on aqueous solutions.

## Description

The use of a suspension of metal carbide particles (percentage by weight: 50-80%) based on aqueous solutions of optimized composition allows the production of thick metal carbide coatings on high temperature ceramics especially technical ceramics for the manufacture of components or parts that are stable at high temperatures and/or in a chemically and mechanically aggressive atmosphere.

As a result, the metal carbide layer produced in this way has the following advantages over commercially available metal carbide layers (produced by the vapor phase deposition, thermal spraying, pack cementation) for high-temperature applications or applications in contact with chemically aggressive media:
1. thicker and conformal coatings (especially >50 µm) with high material efficiency, can be produced at low cost.
2. The coatings produced in this way have an isotropic texture with random grain boundary orientation in contrast to CVD/PVD (Chemical/Physical Vapor Deposition) coatings. In application, this leads to a reduced susceptibility to crack formation over the entire layer thickness and to an increase in the diffusion path for species harmful to the substance along the grain boundaries.

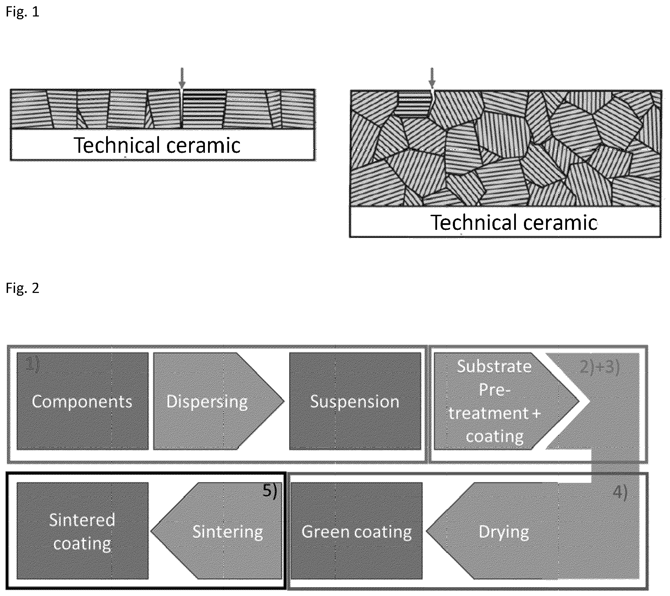

Figure 1 shows a comparison of the structural properties of a metal carbide layer on a technical ceramic substrate prepared by a CVD/PVD process (left) with a layer prepared using an aqueous suspension of metal carbide particles (right).

Technical ceramics, also known as high-performance or engineering ceramics, are known for their excellent mechanical and thermo-physical properties along with their good chemical stability. They can be broadly classified into oxide ceramics and non-oxide ceramics (mainly carbide and nitride ceramics). Most ceramics have a high melting point >1800°C. They are manufactured mainly by powder metallurgy, additive manufacturing or slip casting processes. Although, they are high performance materials, they are associated with disadvantages, which limit their lifetime or performance. For example, some oxide ceramics like MgO, are used as crucibles for handling molten metals (like plutonium) under chemical and mechanical degradation. Also, carbide ceramics like sintered SiC have limited lifetime and performance in high temperature atmosphere involving halogens, silanes, hydrogen. Thus, performance and lifetime of such ceramic components or parts can be enhanced by coating it with material with superior chemical and/or mechanical properties than substrate itself. Apart from the this, coatings can also add functionality to the components by altering the surface properties like wetting behaviour, emissivity, particle release, etc. (s. Wolfgang Kollenberg, Technische Keramik: Grundlagen - Werkstoffe - Verfahrens-technik-Vulkan Verlag, sowie Michael McNallan-lnteraction of Silicon Carbide and Nitride with Halogen Containing Compounds. Materials Science of Carbides, Nitrides and Borides pp 247-266).

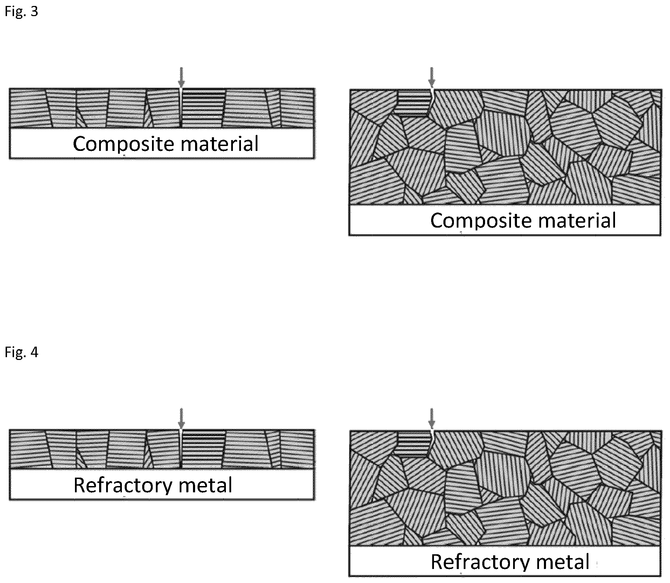

Figure 3 shows a comparison of the structural properties of a metal carbide layer on a composite material substrate prepared by a CVD/PVD process (left) with a layer prepared using an aqueous suspension of metal carbide particles (right).

Composite materials are high-performance materials known for their lightweight and high temperature mechanical and thermo-physical properties along with their good chemical stability. The high temperature composites can be broadly classified into carbon fiber reinforced carbon (CFC) matrix composites, carbon matrix reinforced ceramic matrix composites, and ceramic fiber reinforced ceramic matrix composites. Most carbon and ceramic matrix composites have a high melting point >1800°C.

Although, they are high performance materials, they are associated with disadvantages, which limit their lifetime or performance. Carbon matric composites are subjected to wear and erosion. In addition, their application is limited in oxidising atmosphere >500°C. In heat treatment applications where CFCs are used as charging racks/trays, the undesirable contact reaction occur between CFC and part to be heat-treated or sintered. During quenching process, CFC is used as carrier / charging rack. Since, CFC is porous; it will soak the quenching medium like mineral oil. This in the subsequent heat treatment will produce undesirable gases and could damage the CFC part. Other composites with ceramic matrix like C/SiC or SiC/SiC would have limited lifetime and performance in high temperature atmosphere involving halogens, silanes, hydrogen. Also, in application involving very high temperatures like turbine blades, nozzles and space application, the composite parts used are subjected to very harsh environment with high temperature, mechanical and/or oxidising atmosphere. Such systems are known from
- R. Drehmann et.al.- Thermally sprayed diffusion barrier coatings on C/C lightweight charging racks for furnace applications. Surface & Coatings Technology 2013.
- Samuel J.Frueh et.al.- Carbon fiber reinforced ceramic matrix composites with an oxidation resistant boron nitride interface coating. Ceramics International-2018.
- Roger Naslain, Francis Langlais- CVD-Processing of Ceramic-Ceramic Composite Materials. Tailoring Multiphase and Composite Ceramics pp 145-164 and
- Terjing,R et.al.- Advantages of CFC fixtures when case hardening in automotive construction. Elektrowärme International. 75. 45-49

Thus, performance and lifetime of such composites can be enhanced by coating it with material with superior chemical and/or mechanical properties than substrate itself. Apart from the this, coatings can also add functionality to the components by altering the surface properties like wetting behaviour, emissivity, particle release, etc.

Figure 4 shows a comparison of the structural properties of a metal carbide layer on a refractory metal substrate prepared by a CVD/PVD process (left) with a layer prepared using an aqueous suspension of metal carbide particles (right).

Refractory metals and their alloys are known for their high melting point, high temperature performance and resistance against aggressive chemicals. However, the performance and lifetime of the refractory metal component is limited in applications like MOCVD reactor parts, crucible for crystal growth (PVT SiC, GaN, AIN, sapphire,..) in semiconductor industry, gas phase growth of diamond and polysilicon, due to the aggressive chemical environment (silanes, halogens, hydrocarbons). Also, applications like molten salt reactor, casting molds, nozzles, crucibles used in metallurgical applications undergo both chemical attack and mechanical erosion. Thus, performance and lifetime of such refractory metal components or parts can be enhanced by coating it with material with superior chemical and/or mechanical properties than metals itself. Apart from improving the lifetime, coating can also provide addition functionality to the component like heating elements by de-/increasing the high temperature surface emissivity through de-/increased surface roughness/porosity of coating.

Refractory metal carbides such as titanium, zirconium, hafnium, vanadium, niobium, tantalum, chromium, molybdenum, tungsten carbide are characterized by their high mechanical, chemical and thermal resistance. Thus, the carbide materials are used in the production of materials at high temperatures and/or in chemically aggressive environments, in the production of cutting tools or even engine nozzles. Therefore, such carbide materials are choice of material for coating because they have better properties than technical ceramics, composite material, and refractory metals itself.

Due to their mechanical hardness, however, metal carbides are difficult to process. Therefore, solid molded parts with more complex geometries are difficult and cost-intensive to manufacture from these materials. For this reason, components or parts are usually only coated with the metal carbides. Commonly used coating processes are the CVD (Chemical Vapor Deposition) process, PVD (Physical Vapor Deposition) process, Pack cementation, carburization process, thermal and plasma coating. However, these coatings have limitations (s. Michael McNallan-Interaction of Silicon Carbide and Nitride with Halogen Containing Compounds. Materials Science of Carbides, Nitrides and Borides pp 247-266 sowie GuanghuiFeng et.al.- Effect of tantalum carbide on the ablation behaviors of hafnium carbide coating for C/C composites under single and cyclic oxyacetylene torch environments. Surface and Coatings Technology-2020 sowie P.Chagnon, P.Fauchais-Thermal spraying of ceramics. Ceramics International - 1984 sowie Reuven Porat - CVD coating of ceramic layers on ceramic cutting tool materials. Journal de Physique IV (Proceedings) 02-1991; s. Richard P. Walters & Bernard S. Covino, Evaluation of high-Temperature diffusion barriers for the Pt-Mo system- Metallurgical Transactions A volume 19, pages2163-2170 (1988), Song, Hoon et.al., Investigation of Reusable Crucibles on Uranium Casting by Injection Method- Proceedings of the KNS 2014 Fall Meeting, (Korea, Republic of: KNS).

The main disadvantages of vapour phase coatings are cost and difficulties in obtaining conformal coating in components with complex geometry. The coatings normally have preferential grain growth as shown in figures 1, 3, and 4 (s. Richard P. Walters & Bernard S. Covino, Evaluation of high-Temperature diffusion barriers for the Pt-Mo system- Metallurgical Transactions A volume 19, pages2163-2170 (1988), Song, Hoon et.al., Investigation of Reusable Crucibles on Uranium Casting by Injection Method- Proceedings of the KNS 2014 Fall Meeting, (Korea, Republic of: KNS). Also, once damaged coating cannot be refurbished. The thermal spraying process is also used to produce carbide coatings. The limitation of this process is the presence of high amount of binders like metal or ceramics with comparatively lower melting point than the substrate. The presence of binder limits the performance in high temperature atmosphere and also against aggressive chemicals (s. Michael McNallan-Interaction of Silicon Carbide and Nitride with Halogen Containing Compounds. Materials Science of Carbides, Nitrides and Borides pp 247-266 sowie GuanghuiFeng et.al.-Effect of tantalum carbide on the ablation behaviors of hafnium carbide coating for C/C composites under single and cyclic oxyacetylene torch environments. Surface and Coatings Technology-2020 sowie P.Chagnon, P.Fauchais-Thermal spraying of ceramics. Ceramics International - 1984 sowie Reuven Porat - CVD coating of ceramic layers on ceramic cutting tool materials. Journal de Physique IV (Proceedings) 02-1991).

Apart from the vapour phase coating, pack cementation process is widely reported in literatures and is used by industries. Although, this process is economical compared to CVD/PVD process, there are also other disadvantages associated with this process.

The process converts the surface of refractory metal to carbide by diffusion of carbon/carbide forming metal. Hence no additional layer is added but the carbide is formed by converting the surface of the component or part. Since there is change in the chemistry of the substrate material, the mechanical properties are significantly affected. Also, once damaged, the coating cannot be refurbished. The damage to the coating has direct significant influence on mechanical property of the substrate. The thermal spraying process is also used to produce carbide coatings. The limitation of this process is the presence of high amount of binders like metal or ceramics with comparatively lower melting point than composite material. The presence of binder limits the performance in high temperature atmosphere and against aggressive chemicals.

Apart from the vapour phase coating, carburization process is widely reported in literatures and is used by industries. Although, this process is economical compared to CVD/PVD process, there are also other disadvantages associated with this process. During carburization, the refractory metal is either coated with carbon layer or embedded in carbon powder or exposed to hydrocarbon/carbon oxide gases at temperature >500°C where carbon is made to diffuse through the surface of the refractory metal. The process converts the surface of the refractory metal to carbide. Hence no additional layer of carbide is added but the carbide is formed by converting the surface of the component or part. Since there is change in the chemical composition of the substrate material, the mechanical properties are significantly affected. During carbon diffusion and carbide formation, new grains and grain boundaries are formed. This produced defects on the surface of component leading to deterioration of mechanical properties of the component itself. Since carburization is diffusion process, stoichiometric carbide layer is not formed. There exists a composition gradient where amount of carbon decreases from the surface to the core of the coated part. Also, once damaged, the coating cannot be refurbished. The damage to the coating has direct significant influence on mechanical property of the substrate. With carburization, the carbide of base material only can be obtained (s. JPH10212567A, US7056383, WO 2017/059467 A1, and US20140041589A1). The thermal spraying process is also used to produce carbide coatings. The limitation of this process is the presence of high amount of binders like metal or ceramics with comparatively lower melting point than refractory metal. The presence of binder limits the performance in high temperature atmosphere and also against aggressive chemicals (s. Song, Hoon et.al., Investigation of Reusable Crucibles on Uranium Casting by Injection Method-Proceedings of the KNS 2014 Fall Meeting, (Korea, Republic of: KNS)).

The task according to the invention was now to develop suitable metal carbide coating on technical ceramics which is thick, low porous with high density, high-purity, isotropic and can be produced by the wet ceramic route. Specifically, the task was to produce tantalum carbide films on technical ceramics like sintered or recrystallized SiC, AIN with thicknesses from 20µm to 300µm, preferably with no open porosity (<5%), an impurity level of <500ppm, and randomly oriented, isotropic grain structure (Lotgering factor for each Miller plane from XRD measurements <0.2).

Furthermore, it was the task according to the invention to develop suitable metal carbide coating on composite material which is thick, low porous with high density, high-purity, isotropic and can be produced by the wet ceramic route. Specifically, the task was to produce tantalum carbide films on composites like CFC, C/SiC, SiC/SiC with thicknesses from 20µm to 300µm, preferably with no open porosity (<5%), an impurity level of <500ppm, and randomly oriented, isotropic grain structure (Lotgering factor for each Miller plane from XRD measurements <0.2).

Moreover, it was the task according to the invention to develop suitable metal carbide coating on refractory metals which is thick, low porous with high density, high-purity, isotropic and can be produced by the wet ceramic route. Specifically, the task was to produce tantalum carbide films on refractory metals like tantalum, molybdenum, tungsten and their alloys with thicknesses from 20µm to 300µm, preferably with no open porosity (<5%), an impurity level of <500ppm, and randomly oriented, isotropic grain structure (Lotgering factor for each Miller plane from XRD measurements <0.2)

These objectives are achieved by the substrate with the features of claim 1 and the method with the features of claim 11. The dependent claims are directed to preferred variants.

The developed process includes the following steps (see Figure 2): 1) preparation and dispersion of an aqueous suspension to produce a sinterable layer with a green density >50%, 2) pre-treatment of the substrates to produce a hydrophilic surface, 3) application of the suspension by brushing, dipping or a spray process, 4) low temperature heat treatment to dry the layer, 5) sintering of the dried layer by a high temperature heat treatment (>1900 °C).

Figure 2 shows a process sequence for the generation of a metal carbide layer with aqueous suspension.
1) The suspension composition must be chosen to achieve a green density of at least 50%, preferably >60%. Typical compositions of aqueous suspensions for the production of metal carbide coatings are summarized in Table 1. In addition to the solvent water and the metal carbide as coating material with a typical solid content of 60-85 wt% at an average grain size of 0.1-2 µm, dispersants (e.g.: polyacrylic acid (PAA), tetrabutylammonium hydroxide (TBAH)) are used to reduce the negative influence of agglomeration effects of the metal carbide particles on the achievable green density. Here, the so-called zeta potential as an accessible measured value of the suspension serves as a measure for the electrostatic stabilization of individual particles. Additonial to TBAH, Polyvinylalcohol is used to increase the stabilization force by a steric character and at the same time increases binding to substrate as binding agent. The addition of a defoamer/anti-foaming agent (fatty alcohol polyalkylene glycol ether) prevents bubble formation and increases layer homogeneity. The further addition of Si and refractory silicide as TaSi2 or MoSi2 are preferable as sintering aids. This favours the sintering behaviour of the metal carbide layer during the high-temperature treatment (see step 5) and has been state of the art in the production of metal carbide ceramics for quite some time. Optimized material combinations for the fabrication of TaC layers are summarized in Table 2.

**Table 1: Typical composition of aqueous suspensions for the preparation of metal carbide coatings.**

| Components | Purpose/Influence | wt% |
|---|---|---|
| Metal carbide (average particle size: 0.1-2µm) | Coating material | 60 - 85 |
| H₂O | Solvent | - |
| PAA/TBAH | Dispersing agent | 0.05 - 2 |
| PVA | Stabilization | 0 - 2 |
| Co or Si or Silicides | Sinter additives | 0 - 5 |
| Alkyl polyethylene glycol ether | Anti-foaming agent | |

**Table 2: Optimized material combinations for 2 different dispersants and corresponding pH values for the preparation of TaC coatings.**

| Component | Purpose/Influence | wt% |
|---|---|---|
| TaC (average particle size: 1µm or 1mm) | Coating material | 70 |
| H₂O | Solvent | - |
| Case 1: PAA (pH: 8) Obtained green density: 54% | Dispersing agent | 0.5 |
| Case 2: TBAH (pH: 7) Obtained green density: 56% | Dispersing agent | 0.5 |
| Si oder Silicides | Sinter additive | 0.7 |
| Alkyl polyethylene glycol ether | Anti-foaming agent | |

The TaC suspension is prepared by means of a dispersing agitator. The TaC powder and the additives mentioned are added in stages to the distilled water in the quantities required. Between the additions of each component, the suspension is processed by means of an agitator for up to 15 minutes at 4000 rpm or lower to ensure homogeneous distribution of the powder or the added additives in the suspension. The suspension is then agitated for at least 12 hours.
2) In order to achieve good adhesion of the coating to the substrate, it is necessary to first roughen the substrate mechanically and then create a hydrophilic surface by appropriate cleaning steps in an ultrasonic bath. The presence of dust, fats and the impurities should be removed. Special treatment to remove surface oxides can also be done.
3) The TaC suspension is applied to the technical ceramics or to the composite material or to the refractory metal by dipping, brushing or spray application. In spray application, the substrate is positioned centrally on a rotatable turntable and fixed in place by means of special holders. Depending on the geometry of the material to be coated, the tilt angle of the turntable and the spray angle of the spray gun are also adjusted using a specially designed holder.
Under fixed spray parameters (including the atomizer air pressure, the throttling of the material feed via the needle stroke, and the distance of the nozzle orifice from the substrate surface), the refractory metal body or ceramic substrate body or the refractory metal body is then coated with the TaC suspension. The number of revolutions of the rotary table during the spraying process is based on the desired layer thickness of the subsequent TaC coating.
4) In order to obtain crack-free coatings, it has proven necessary to anneal the coating in several temperature steps. In particular, holding phases are necessary to prevent too rapid drying resulting in cracking when dispersants are used. The specific holding phases are based on the combustion processes of the specific dispersant used. Data from thermogravimetric measurements can be used for process optimization. If Co is used as a sintering aid, it is necessary to carry out the drying process under an inert gas atmosphere. An example of the optimized drying steps of a suspension with the dispersant PAA is as follows: 3h heating at 150 °C, 2h heating at 200 °C, 2h dwell at 200 °C, 2h heating at 225 °C, 5h heating at 330 °C, 2h heating at 350 °C, 2h dwell at 350 °C, 4h heating at 400 °C, 2h heating at 450 °C.
5) Sintering of the dried layer is carried out under argon atmosphere at a pressure of 700 Torr at 2000°-2300°C for 5h and preferably for 3h at 2300°C. The addition of sintering aids (Co or Si or Silicide) increases the flow behaviour during the sintering process and higher final density of the coating is achieved.

With the outlined process, it is now possible to produce coatings of metal carbides by the wet ceramic route on the basis of aqueous solutions that meet the above requirements. The solution clearly no longer has any ecological, health or safety disadvantages. Moreover, with the process, the damaged coating section can be repaired and the component can be refurbished. Also, with suitable masking techniques, the coating can only be done on required area. The obtained coating is polycrystalline and does not influence the mechanical properties of the substrate. The crack propagation is relatively difficult in the presence of grain boundaries. The surface micro cracks do not directly propagate throughout the coating thickness but are deflected because of grain boundaries. The final coating has either a very small amount of sintering additive (<1%) or no additive depending on the suspension composition. Because of high temperature sintering step involved, a chemical/ diffusion bonding is possible between the coating and substrate material (matrix phase), thus forming a coating with stronger adhesion to substrate. If the substrate is a refractory metal, the coating would have good interface with carbide layer because of the possibility for chemical bond between metal and metal carbide at sintering temperature. The presence of metallic material at the interface would also act as intrinsic sintering additive and would help in forming denser coating especially at the interface region. Because of this, a chemical reaction or diffusion bonding exists making the adhesion of coating even stronger.

The following material characterization techniques could be used to measure relevant material properties of the material described:
1. Porosity measurement-
   a. Substrate - Mercury porosimetry, archimedes principle, pycnometer
   b. Coating- Optical microscopy and image processing tools
2. Roughness measurement- for eg. DIN 4772
3. Hardness measurement - Vickers measurement or Universal Martens hardness
4. Crystallinity and grain orientation measurement - XRD and Lotgering factor of various miller planes
5. Permeability measurement - Darcy's gas permeability measurement
6. Coating Adhesion measurement- ASTM D 4541- Standard test method for pull-off strength of a coating

The present invention is also directed to the following aspects A1 to A15:
**Aspect A1**
   A Substrate having a metal carbide coating.
**Aspect A2**
   The substrate of aspect A1,
   characterized in that the metal carbide coating is obtained by depositing an aqueous-based suspension of metal carbide particles suitable for the wet-chemical preparation on the substrate followed by a heat treatment process.
**Aspect A3**
   The substrate of aspect A1 or A2,
   characterized in that the substrate is a high temperature composite material with reinforced fibers and/or reinforced particles and a matrix phase.
**Aspect A4**
   The substrate of aspect A3,
   characterized in that the reinforced fibres and/or reinforced particles are selected from the group consisting of carbon fibers, ceramic fibers, ceramic particles and combinations thereof, wherein the fibres are preferably continuous or chopped fibers.
**Aspect A5**
   The substrate of any of aspects A3 or A4,
   characterized in that the matrix is a high temperature material like carbon or ceramics like SiC with melting point or decomposition temperature >2000°C or a refractory metal with melting point >2000°C.
**Aspect A6**
   The substrate of any of aspects A2 to A5,
   characterized in that the composite material has a density of 1,2 g/cm³ to 3,5 g/cm.
**Aspect A7**
   The substrate of any of aspects A1 to A6,
   characterized in that the substrate has a surface roughness value of Ra <20µm, and more preferably <5µm.
**Aspect A8**
   The substrate of any of aspects A1 to A7,
   characterized in that the metal carbide coating comprises or consists of titanium, zirconium, hafnium, vanadium, niobium, tantalum, chromium, molybdenum, or tungsten carbide, or compounds thereof.
**Aspect A9**
   The substrate of any of aspects A1 to A8,
   characterized in that the material of the coating has a melting or decomposition temperature higher than 2300°C and more preferably higher than 2500°C.
**Aspect A10**
   The substrate of any of aspects A1 to A9,
   characterized in that the suspension is selected in its composition such that a green density of the metal carbide coating >50% can be achieved.
**Aspect A11**
   The substrate of any of aspects A1 to A10,
   characterized in that the metal carbide coating has a thickness from 20µm to 300µm, and/or an open porosity <5%, and/or an closed porosity of <5% and/or substantially randomly oriented, isotropic grain structure with a Lotgering factor for each Miller plane from XRD measurements <0.2.
**Aspect A12**
   The substrate of any of aspects A1 to A11,
   characterized in that the metal carbide coating has a surface roughness of Ra <25µm and more preferably Ra<5µm and/or a final density of >80% and preferably >90% of theoretical density and/or a hardness equal to higher than the substrate (or substrate metal) and more preferably above 1000HV in Vicker's scale and/or a good adhesion to the substrate material with adhesion strength >2MPa and preferably >4MPa or has better adhesion to substrate than cohesion of substrate material itself.
**Aspect A13**
   Method for coating a substrate with a metal carbide coating with the steps of
   - application of an aqueous-based suspension of metal carbide particles suitable for the wet-chemical preparation on the substrate
   - followed by a heat treatment process.
**Aspect A14**
   Method of aspect A13,
   characterized in that the application is by brushing, dipping or a spray process.
**Aspect A15**
   Method of aspect A13 or A14,
   characterized in that the heat treatment process comprises heating the green coated body at a temperature >1900°C, more preferentially >2200°C in non-oxidising (Ar, N₂) or reducing (H₂) atmosphere, preferably at a pressure ranging from 25 mbar to 20 bar, more preferably at 5 bar pressure.

The present invention is also directed to the following aspects B1 to B14:
**Aspect B1**
   A Substrate having a metal carbide coating.
**Aspect B2**
   The substrate of aspect B1,
   characterized in that the metal carbide coating is obtained by depositing an aqueous-based suspension of metal carbide particles suitable for the wet-chemical preparation on the substrate followed by a heat treatment process.
**Aspect B3**
   The substrate of aspect B1 or B2,
   characterized in that the substrate is a high temperature metal with melting point of preferably above 2000°C and more preferably above 2300°C, preferably the metal is either a refractory metal, in particular Ta, W, Mo, Hf, Nb, or their alloys, wherein the alloys preferably correspond to composition of 1 or combination of refractory metals being in highest amount.
**Aspect B4**
   The substrate of any of aspects B1 to B3,
   characterized in that the refractory metal has no porosity (<0.7%) or also with porosity <10%, wherein the substrate is preferably produced by powder metallurgy, additive manufacturing or casting and/or the substrate is preferably machined or subjected to pre-treatment to obtain desired properties and geometry.
**Aspect B5**
   The substrate of any of aspects B1 to B4,
   characterized in that the substrate has a surface roughness value of Ra <20µm, preferably <5µm, and more preferably <2µm.
**Aspect B6**
   The substrate of any of aspects B1 to B5,
   characterized in that the substrate has lower amount of surface oxide content < 100nm thick layer.
**Aspect B7**
   The substrate of any of aspects B1 to B6,
   characterized in that the metal carbide coating comprises or consists of titanium, zirconium, hafnium, vanadium, niobium, tantalum, chromium, molybdenum, or tungsten carbide, or compounds thereof.
**Aspect B8**
   The substrate of any of aspects B1 to B7,
   characterized in that the material of the coating has a melting or decomposition temperature higher than 2300°C and more preferably higher than 2500°C.
**Aspect B9**
   The substrate of any of aspects B1 to B8,
   characterized in that the suspension is selected in its composition such that a green density of the metal carbide coating >50% can be achieved.
**Aspect B10**
   The substrate of any of aspects B1 to B9,
   characterized in that the metal carbide coating has a thickness from 20µm to 300µm, and/or an open porosity <5%, and/or a closed porosity of <5% and/or substantially randomly oriented, isotropic grain structure with a Lotgering factor for each Miller plane from XRD measurements <0.2.
**Aspect B11**
   The substrate of any of aspects B1 to B10,
   characterized in that the metal carbide coating has a surface roughness of Ra <5µm and more preferably Ra<2µm and/or a final density of >80% and preferably >90% of theoretical density and/or a hardness equal to higher than the substrate metal and more preferably above 1000HV in Vicker's scale and/or a good adhesion to the substrate material with adhesion strength >2Mpa and preferably >4Mpa.
**Aspect B12**
   Method for coating a substrate with a metal carbide coating with the steps of
   - application of an aqueous-based suspension of metal carbide particles suitable for the wet-chemical preparation on the substrate, preferably a high temperature technical ceramic,
   - followed by a heat treatment process.
**Aspect B13**
   Method of aspect B12,
   characterized in that the application is by brushing, dipping or a spray process.
**Aspect B14**
   Method of aspect B12 or B13,
   characterized in that the heat treatment process comprises heating the green coated body at a temperature >1900°C, more preferentially >2200°C in non- oxidising (Ar, N₂) or reducing (H₂) atmosphere, preferably at a pressure ranging from 25 mbar to 20 bar, more preferably at 5 bar pressure.

## Claims

1. A substrate having a metal carbide coating.

2. The substrate of claim 1,
**characterized in that** the metal carbide coating is obtained by depositing an aqueous-based suspension of metal carbide particles suitable for the wet-chemical preparation on the substrate followed by a heat treatment process.

3. The substrate of claim 1 or 2,
**characterized in that** the substrate is a high temperature technical ceramic with a melting point or a decomposition temperature of preferably above 1800°C and more preferably above 2300°C, wherein the ceramic is preferably a carbide like SiC, TiC, NbC or nitride like AIN, TiN or the substrate is a combination of nitride and carbide with a melting point or a decomposition temperature of preferably above 1800°C.

4. The substrate of any of claims 1 to 3,
**characterized in that** the substrate is a technical ceramic that has low porosity (<0.7%) or also with high porosity <20%, wherein the substrate is preferably produced by powder metallurgy, additive manufacturing or slip casting and/or the substrate is preferably machined or subjected to pre-treatment to obtain desired properties and geometry.

5. The substrate of any of claims 1 to 4,
**characterized in that** the substrate has a surface roughness value of Ra <20µm, and more preferably <5µm.

6. The substrate of any of claims 1 to 5,
**characterized in that** the metal carbide coating comprises or consists of titanium, zirconium, hafnium, vanadium, niobium, tantalum, chromium, molybdenum, or tungsten carbide, or compounds thereof.

7. The substrate of any of claims 1 to 6,
**characterized in that** the material of the coating has a melting point or a decomposition temperature higher than 2300°C and more preferably higher than 2500°C.

8. The substrate of any of claims 1 to 7,
**characterized in that** the suspension is selected in its composition such that a green density of the metal carbide coating >50% can be achieved.

9. The substrate of any of claims 1 to 8,
**characterized in that** the metal carbide coating has a thickness from 20µm to 300µm, and/or an open porosity <5%, and/or an closed porosity of <5% and/or substantially randomly oriented, isotropic grain structure with a Lotgering factor for each Miller plane from XRD measurements <0.2.

10. The substrate of any of claims 1 to 9,
**characterized in that** the metal carbide coating has a surface roughness of Ra <25µm and more preferably Ra<5µm and/or a final density of >80% and preferably >90% of theoretical density and/or a hardness equal to higher than the substrate metal and more preferably above 1000HV in Vicker's scale and/or a good adhesion to the substrate material with adhesion strength >2MPa and preferably >4MPa or has better adhesion to substrate than cohesion of substrate material itself.

11. Method for coating a substrate with a metal carbide coating with the steps of
• application of an aqueous-based suspension of metal carbide particles suitable for the wet-chemical preparation on the substrate, preferably a high temperature technical ceramic,
• followed by a heat treatment process.

12. Method of claim 11,
**characterized in that** the application is by brushing, dipping or a spray process.

13. Method of claim 11 or 12,
**characterized in that** the heat treatment process comprises heating the green coated body at an temperature >1900°C, more preferentially >2200°C in non-oxidising (Ar, N₂) or reducing (H₂) atmosphere, preferably at a pressure ranging from 25 mbar to 20 bar, more preferably at 5 bar pressure.
